# EUROPÄISCHE PATENTSCHRIFT

(11) **EP 1 105 544 B1**
(45) Veröffentlichungstag und Bekanntmachung des Hinweises auf die Patenterteilung: **09.10.2002**
(21) Anmeldenummer: 99938290.6
(22) Anmeldetag: 20.07.1999
(51) Int. Cl.: C22B 19/08, C22B 7/00, C22B 19/30

(54) **VERFAHREN ZUR ZINKERZEUGUNG NACH DEM IS-VERFAHREN IN EINER IS-SCHACHTOFENANLAGE**
METHOD FOR PRODUCING ZINC USING THE IS PROCESS IN AN IS SHAFT FURNACE
PROCEDE DE PRODUCTION DE ZINC SELON LE PROCEDE IMPERIAL SMELTING DANS UNE INSTALLATION A FOUR VERTICAL POUR IMPERIAL SMELTING

(30) Priorität: 20.07.1998 DE 19832528
(43) Veröffentlichungstag der Anmeldung: 13.06.2001
(73) Patentinhaber: M.I.M. Hüttenwerke Duisburg Gesellschaft mit Beschränkter Haftung, 47249 Duisburg (DE); Dr. Küttner GmbH & Co. KG, D-45128 Essen (DE)
(72) Erfinder: SCHNEIDER, Wolf-Dieter, D-45219 Essen (DE); RACHNER, Hans-Günther, D-45219 Essen (DE)
(74) Vertreter: Gesthuysen, von Rohr & Eggert
(86) Internationale Anmeldenummer: EP9905143
(87) Internationale Veröffentlichungsnummer: WO00005424

(56) Entgegenhaltungen:
- EP-A- 0 855 448
- DE-A- 4 433 596
- GB-A- 2 197 343
- SCHNEIDER W -D ET AL: "ZINKERZEUGUNG AUS SEKUNDAERMATERIAL" ERZMETALL, Bd. 51, Nr. 4, 1. April 1998 (1998-04-01), Seiten 266-272, XP000748941 ISSN: 0044-2658
- PATENT ABSTRACTS OF JAPAN vol. 012, no. 365 (C-532), 29. September 1988 (1988-09-29) & JP 63 118026 A (SUMITOMO METAL MINING CO LTD), 23. Mai 1988 (1988-05-23)
- PATENT ABSTRACTS OF JAPAN vol. 009, no. 032 (C-265), 9. Februar 1985 (1985-02-09) & JP 59 177331 A (SUMITOMO KINZOKU KOUZAN KK), 8. Oktober 1984 (1984-10-08)

## Beschreibung

Die Erfindung betrifft ein Verfahren zur Zinkerzeugung nach dem 15-Verfahren in einer IS-Schachtofenanlage und dem Oberbegriff des Anspruchs 1.

Das IS (Imperial Smelting)-Verfahren zur Zinkerzeugung sowie IS-Schachtofenanlagen sind bereits seit langem bekannt. Das IS-Verfahren zeichnet sich dadurch aus, daß in einem Arbeitsgang sowohl Zink als auch Blei als Rohmetalle mit hoher Ausbeute gewonnen werden. Der Ofeneintrag besteht bei dem bekannten Verfahren aus Koks und Sinter. Außerdem werden im Wälzrohr angereicherte und brikettierte Sekundärstäube aufgegeben. Der Nachteil des Standes der Technik besteht darin, daß die Verfahrensstufen des Anreicherns der Stäube im Wälzrohr und des Brikettierens nicht nur personal- und damit kostenintensiv sind, es wird hierdurch auch die Umwelt belastet.

Ein Verfahren zur Zinkerzeugung nach dem Oberbegriff des Anspruchs 1 ist bereits aus der Literaturstelle "SCHNEIDER W -D ET AL: 'ZINKERZEUGUNG AUS SEKUNDAERMATERIAL' ERZMETALL, Bd. 51, Nr. 4, 1. April 1998 (198-04-01), Seiten 266-272, XP000748941 ISSN: 0044-2658" bekannt. Das aus dieser Veröffentlichung bekannte Verfahren bereits die Verwendung eines Zink und einen Kohlenstoffträger enthaltenden Staubgemisches. Wie das bekannte Verfahren durchzuführen ist bzw. wie die diesbezügliche IS-Schachtofenanlage ausgebildet sein muß, um einen reibungslosen betrieblichen Ablauf bei höchstmöglichem metallurgischem Ausbringen zu erzielen, geht aus dieser Literaturstelle nicht hervor.

Aus der Veröffentlichung "PATENT ABSTRACTS OF JAPAN vol. 012, no. 365 (C-532), 29. September 1988 (1988-09-29) & JP 63 118026 A (SUMITOMO METAL MINING CO LTD), 23. Mai 1988 (1988-05-23)" ist es bekannt, einem Hochofen neben stückigem Koks und gesintertem oder brikettiertem Zink zusätzlich einen Kohlenstoffträger mit einer mittleren Korngröße kleiner oder gleich 1 mm pneumatisch zuzuführen. Die Verwendung eines einen Kohlenstoffträger und Zink enthaltenden Staub aufweisenden Staubgemisches ist nicht vorgesehen.

Aus der GB - A - 2 197 343 geht bereits ein Hochofen zur Zinkherstellung hervor, dem stückiger Koks und Zink zugeführt wird. Dabei ist vorgesehen, diese Materialien auch im unteren Bereich des Hochofens pneumatisch zuzuführen. Hierbei wird ein Gewichtsverhältnis des Zinks zum Kohlenstoff von 0,1 bis 1,2 verwendet. Bei diesem Verfahren ist der Einsatz eines feinkörnigen Staubgemisches nicht vorgesehen.

Schließlich geht aus der DE 44 33 596 A ein Verfahren zum pneumatischen Fördern von kunststoffhaltigen Materialien in einem Reaktionsgefäß hervor.

Aufgabe der vorliegenden Erfindung ist es, ein Verfahren der eingangs genannten Art zur Verfügung zu stellen, wobei ein reibungsloser betrieblicher Ablauf mit maximalem metallurigschem Ausbringen erzielt werden soll.

Erfindungsgemäß ist nun zunächst einmal vorgesehen, daß ein feinkörniges Staubgemisch, das einen Kohlenstoffträger und Zink enthaltenden Staub aufweist, in den unteren Bereich des IS-Schachtofens direkt eingeblasen wird. Durch das Direkteinblasen an sich in die Reduktionszone des IS-Schachtofens ergeben sich eine Reihe von wesentlichen Vorteilen. Das Zink wird oh-ne eine Zwischenstufe wie Wälzen oder Brikettieren direkt aus dem Sekundärstaub als Metall gewonnen. Analysen der Produkte des IS-Schachtofens zeigen, daß die eingeblasenen Stäube zu mindestens 80 % bezogen auf die insgesamt eingeblasene Menge verwertet werden. Darüber hinaus läßt sich auch die aufgegebene Koksmenge verringern, wenn der Zinkstaub mit dem Kohlenstoffträger eingeblasen wird, was die Kosten erheblich reduziert, da ein feinkörniger Kohlenstoffträger erheblich kostengünstiger ist als der üblicherweise verwendete Koks. Das Einblasen von Kohlenstoff in die Reduktionszone des IS-Schachtofens ist im übrigen eine Möglichkeit, die Schlacke von den Heißwinddüsen zu vorblasen, um den ZnO-Gehalt in der Schlacke zu senken und damit auf der einen Seite die Zinkverluste des Prozesses zu reduzieren und andererseits die Schlacke analytisch umweltfreundlicher zu gestalten. Negative Einflüsse auf den Ofengang bedingt durch das Direkteinblasen konnten nicht festgestellt werden.

Der feinkörnige Kohlenstoffträger dient bei der Erfindung im übrigen nicht nur der metallurgischen Verwertung, sondern gewährleistet auch die Förderfähigkeit des Staubes, da dieser an sich nicht oder nur mit großen Schwierigkeiten pneumatisch förderfähig ist. Durch das Einblasen des erfindungsgemäßen Staubgemisches wird im übrigen die Ofenführung bezüglich der Gichtgasanalyse drastisch geändert. Der CO-Gehalt und der H₂-Gehalt steigen um mindestens 10 bzw. 30 %, so daß sich ein reicheres Gichtgas ergibt.

Weiterhin ist festzustellen, daß eine nach dem erfindungsgemäßen Verfahren arbeitende IS-Schachtofenanlage (hierunter als "erfindungsgemäße IS-Schachtofenanlage" bezeichnet) auch in Kombination mit einer Sinteranlage, einer Heißbrikettierung und der Direkteinblasung die Möglichkeit eröffnet, für unterschiedlichste Materialien eine adäquate Technologie zu bieten. Die Sinteranlage mit ihrer nachgeschalteten Schwefelsäureproduktion kann neben den klassischen Erzkonzentraten alle diejenigen Reststoffe verwerten, die Schwefel enthalten. Darüber hinaus bietet sich die Möglichkeit, Filterkuchen, Schlämme, oxidische und halogenhaltige Materialien zu verarbeiten. Die Heißbrikettierung ist der Prozeß, bei dem schwefelfreie Sekundärstoffe verarbeitet werden. Das Material kann hier zwischen trocken und feucht, grob- und feinkörnig variieren. Typische Vorstoffe sind hier Wälzoxid, Filterstäube, Trasse und Aschen, die für den Einsatz in dem IS-Schachtofen konditioniert werden. Stäube, insbesondere solche aus Gasreinigungsanlagen der Eisen- und Stahlindustrie, die fein und trocken sind, werden über die Direkteinblasung optimal verwertet. Hier entsteht auf direktem Weg aus dem Reststoff bzw. Abfall Metall, ohne daß vorher Anreicherungs- oder andere Verfahrensschritte notwendig sind. Verfahrenstypisch stören hier weder Blei noch Kupfer, da beide Metalle im IS-Prozeß wiedergewonnen werden. Organische Anhaftungen an den Materialien, z. B. Dioxine, werden durch das Einblasen in die heiße Düsenzone im IS-Schachtofen zerstört.

Zur Erzielung einer guten Förderfähigkeit des Staubgemisches ist vorgesehen, daß die mittlere Korngröße des Kohlenstoffträgers zwischen 10 und 200 µm liegt, vorzugsweise etwa 50 µm beträgt und wobei die mittlere Korngröße des Staubs kleiner 50 µm ist, vorzugsweise kleiner 10 µm ist. Der Kohlenstoffträger mit dem vorgenannten mittleren Korndurchmesser eignet sich deshalb besonders gut als Förder- bzw. Transportmedium für feine Stäube, da die Staubpartikel kleiner sind als die Teilchen des Kohlenstoffträgers, die in der Regel eine sehr unebene Oberfläche haben, so daß sich die Staubpartikel in den Teilchen des Kohlenstoffträgers gut ein- bzw. durch Adhäsion anlagern können. Dabei ist festgestellt worden, daß als Kohlenstoffträger beispielsweise Feinkohle, Anthrazit, Koksabrieb, Braunkohlenkoksstaub sowie Kunststoffe und auch Mischungen der vorgenannten Materialien verwendet werden können. Als Zink enthaltender Staub kann beispielsweise Zinkstaub, Zinkasche, Kupferhüttenstaub, Hochofenstaub, Stahlwerksstaub, rezirkulierter Kupolofenstaub, Messingstaub und/ oder Bleistaub verwendet werden. Der Staub sollte einen Mindestinhalt von 15 % Zink aufweisen. Nach oben hin sind dem Zinkgehalt keine Grenzen gesetzt. Stäube mit Zink- oder Bleigehalten unter 15 % sollten einer vorgeschalteten Anreicherung unterzogen werden. Die Einsatzstoffe können sowohl bleifrei sein als auch nennenswerte Bleianteile haben. Selbst die Verwendung reiner bleihaltiger Reststoffe ist möglich.

Der Erzielung einer guten Förderfähigkeit des Staubgemisches dient auch, daß der Kohlenstoffträger und der Staub in einem Gewichtsverhältnis von mindestens 0,5 zu 1 gemischt werden und vorzugsweise in einem solchen Verhältnis, das dem Zn/C-Verhältnis des IS-Schachtofens 2 entspricht, insbesondere etwa 1 zu 1. Dieses Mischungsverhältnis berücksichtigt in erster Linie die physikalischen Gesichtspunkte der Förderfähigkeit des Staubgemisches und nur nachrangig die metallurgischen Belange.

Weiterhin ist festgestellt worden, daß es günstig ist, daß das Staubgemisch von der Einblasanlage pneumatisch und vorzugsweise kontinuierlich zum IS-Schachtofen gefördert wird. Diese Art der Förderung läßt sich sehr leicht realisieren. Es ist festgestellt worden, daß die Förderung sowohl im Flugstrom mit Geschwindigkeiten von bis zu 25 bis 30 m/s oder aber bei entsprechendem Material im Dichtstrom mit bis zu 10 m/s durchgeführt werden kann.

Das Direkteinblasen bietet weiterhin die Möglichkeit, den metallurgischen Prozeß in einfacher Weise bedarfsweise zu beeinflussen, in dem die eingeblasene Menge an Staub, Kohlenstoffträger bzw. Staubgemisch oder das Verhältnis von Staub zum Kohlenstoffträger verändert wird. Hierzu ist vorgesehen, daß der Staub, der Kohlenstoffträger und das Staubgemisch mit einem inerten Gas, vorzugsweise mit Stickstoff gefördert werden, daß das Verhältnis von Staub zum Kohlenstoffträger einstellbar ist und daß die Menge des Gases zum Fluidisieren, Fördern und Einstellen der Geschwindigkeit des Staubgemisches steuerbar ist.

Außerdem bietet das Direkteinblasen in einfacher Weise die Möglichkeit, die Temperatur im Unterofen des IS-Schachtofens zu beeinflussen. Zu diesem Zweck wird die Temperatur der Formgasblasen an den Heißwinddüsen des IS-Schachtofens in Abhängigkeit vom Schlackenstand gemessen und die Einblasanlage aufgrund des Meßergebnisses derart gesteuert, daß sich zumindest im unteren Bereich des IS-Schachtofens eine im wesentlichen konstante Temperatur einstellt. Zu diesem Zweck bietet es sich insbesondere an, in den IS-Schachtofen über Koaxiallanzen neben dem Staubgemisch über einen Ringsspalt der Koaxiallanze ein Gasgemisch aus Stickstoff einerseits und Sauerstoff und/oder Luft andererseits einzublasen, wobei die Menge des Gasgemisches und das Verhältnis von Stickstoff zu Sauerstoff/Luft insbesondere in Abhängigkeit der Temperatur der Koaxiallanzen und/oder des IS-Schachtofens steuerbar ist.

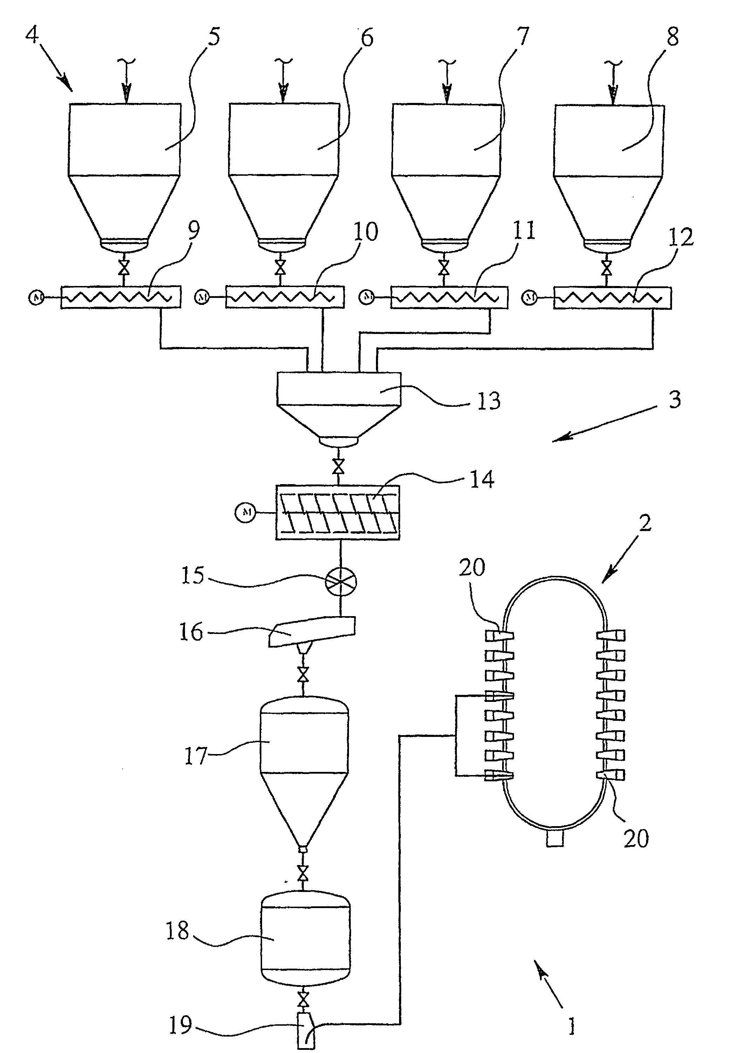

Nachfolgend wird ein Ausführungsbeispiel der Erfindung anhand der Zeichnung beschrieben.

Die einzige Figur zeigt eine schematische Darstellung eines Teils der erfindungsgemäßen IS-Schachtofenanlage 1, die einen IS-Schachtofen 2 und eine Einblasanlage 3 aufweist. Über die Einblasanlage 3 wird ein feinkörniges Staubgemisch in den IS-Schachtofen 2 eingeblasen, das einen Kohlenstoffträger und einen Zink enthaltenden Staub aufweist. Wie zuvor bereits ausgeführt worden ist, werden als Einblasmaterialien Zinkstäube unterschiedlicher Herkunft und als Kohlenstoffträger vorzugsweise Feinkohle verwendet.

Im dargestellten Ausführungsbeispiel weist die Einblasanlage 3 eine Bevorratungseinrichtung 4 mit insgesamt vier Silos 5, 6, 7, 8 auf. Bei der dargestellten Einblasanlage 3 ist vorgesehen, daß wenigstens zwei Silos als Speicher für Staub und die restlichen Silos für den Kohlenstoffträger vorgesehen sind. Gefüllt werden die Silos 5, 6, 7, 8 in der Regel aus Tankkesseltransportwagen in einem abgeschlossenen System unter Druck, so daß kein Staub nach außen dringen kann. Es ist auch möglich, daß die Tankkesseltransport in transportable Silos entleert werden, die mit den Silos 5, 6, 7, 8 gekoppelt sind und deren Anzahl der Anzahl der Silos 5, 6, 7, 8 entspricht.

Der Transport und die Förderung des Kohlenstoffträgers und des Staubes erfolgt über Stickstoff. Grundsätzlich ist aber auch die Verwendung eines anderen inerten Gases möglich. Für den Stickstoff weist die IS-Schachtofenanlage 1 einen nicht näher dargestellten Stickstofftank auf, in dem der Stickstoff flüssig gelagert wird. Der Stickstoff wird mit einem Kaltverdampfer verdampft und hat nach Druckreduzierung einen Netzdruck von 14 - 15 bar. Eine Inertisierung des oder der betreffenden Silos ist jederzeit möglich, wenn eine Störung auftritt. Um Störungen feststellen zu können, ist die gesamte IS-Schachtofenanlage 1 im übrigen überwacht und mit einem Leitstand gekoppelt. Außerdem ist eine Steuereinrichtung vorgesehen, um den Prozeß bzw. die gesamte Anlage bedarfsweise steuern und auf Störungen jederzeit reagieren zu können.

Der Stickstoff wird bei der erfindungsgemäßen IS-Schachtofenanlage 1 aber auch noch zu anderen Zwecken verwendet, worauf weiter unten noch näher eingegangen wird. Er dient unter anderem zum Kühlen von Koaxiallanzen der Einblasanlage, zum Transport des Staubgemisches, zum Druckaufbau in dem noch näher zu beschreibenden Einblasgefäß und auch zum Frei- bzw. Rückblasen von blockierten Leitungen. Im übrigen dient der Stickstoff auch zum Auflockern des Staubes und des Kohlenstoffträgers in den Silos 5, 6, 7, 8 und allen anderen Behältern oder Einrichtungen, die vom Staubgemisch durchlaufen werden. In den Silos, Behältern und Einrichtungen sind entsprechende Leitungsanschlüsse insbesondere im Bereich des Bodens vorhanden, um ein Auflockern und Fluidisieren des Gutes von unten her zu ermöglichen. Da insbesondere der Staub hinsichtlich seines Lager- bzw. Förderverhaltens und seiner Hygroskopie (Verklumpung) als problematisches Material anzusehen ist, weisen die Silos 5, 6, 7, 8 im Bereich ihres Austrags Vibrationsböden auf und sind im übrigen isoliert und beheizt.

Die Silos 5, 6, 7, 8 sind jeweils über eine Förderschnecke 9, 10, 11, 12 mit einer Wiegeeinrichtung 13 verbunden. Auch jede der Förderschnecken 9, 10, 11, 12 ist isoliert und beheizt. Zwischen den Silos und der jeweiligen Förderschnecke sind jeweils Schieber vorgesehen, die von der Steuereinrichtung, wie auch alle anderen nachfolgend erwähnten Schieber, angesteuert werden können. Im übrigen ist in jedem der Silos 5, 6, 7, 8 eine Niveaumessung, eine Druckmessung und eine Temperaturmessung über entsprechende Mittel möglich.

Die aus den jeweiligen Silos 5, 6, 7, 8 über die betreffenden Förderschnecken 9, 10, 11, 12, zu fördernden Mengen an Kohlenstoffträger und Staub sind abhängig von der Art und Zusammensetzung des betreffenden Materials. Nach Bestimmung der Zusammensetzung des betreffenden Materials wird über die Steuereinrichtung der IS-Schachtofenanlage 1 das aufzugebende Verhältnis des Staubes zum Kohlenstoffträger ermittelt. Dieses Verhältnis sollte so sein, daß das Zn/C-Verhältnis des Staubgemisches etwa dem des IS-Schachtofens 2 entspricht. Außerdem muß, damit das Staubgemisch im Dichtstrom überhaupt pneumatisch förderfähig ist, das Gewichtsverhältnis des Kohlenstoffträgers zum Staub mindestens 0,5:1 betragen. Vorzugsweise liegt das Gewichtsverhältnis des pneumatisch geförderten Staubgemisches bei etwa 1:1.

Bei der Wiegeeinrichtung 13 handelt es sich um einen Wiegebunker. Auch die Wiegeeinrichtung 13 ist isoliert und beheizt. Im Bodenbereich der Wiegeeinrichtung 13 sind Einlässe vorgesehen, um eine Auflockerung des Materials durch zugegebenen Stickstoff zu ermöglichen. Über wenigstens einen Schieber ist die Wiegeeinrichtung 13 mit einer Mischeinrichtung 14 verbunden, die auch isoliert und beheizt ist und in der die Homogenisierung des Staubgemisches, d. h. die Anlagerung der Staubpartikel an die feinen Kohlenstaubkörner erfolgt.

Der Austrag aus der Mischeinrichtung 14 erfolgt über eine entsprechende Austragseinrichtung 15, bei der es sich vorliegend um eine Zellenradschleuse handelt. Zwischen der Mischeinrichtung 14 und der Austragseinrichtung 15 befindet sich ein Schieber.

Der Mischeinrichtung 14 und der Austragseinrichtung 15 nachgeschaltet ist eine Klassiereinrichtung 16, bei der es sich vorliegend um eine Siebmaschine handelt und an die sich ein Schleusenbehälter 17 anschließt. Die Klassiereinrichtung 16 ist derart ausgebildet, daß die Korngröße des Unterkorns kleiner 2 mm ist. Zwischen der Klassiereinrichtung 16 und dem Schleusenbehälter 17 befindet sich ein pneumatisch betätigbarer Schieber. Der Schleusenbehälter 17 ist, wie auch die zuvor beschriebenen Einrichtungen, isoliert und beheizt und weist eine Niveau- und Druckmessung auf. Im übrigen weist der Schleusenbehälter 17 in seinem Bodenbereich entsprechende Öffnungen auf, um eine Auflockerung des Staubgemisches im Schleusenbehälter 17 zu ermöglichen.

Der Schleusenbehälter 17 ist mit einem Einblasgefäß 18 verbunden, wobei in der Leitung zwischen dem Schleusenbehälter 17 und dem Einblasgefäß 18 wenigstens ein pneumatisch betätigbarer Schieber vorgesehen. Nach Befüllen und Bespannen des Schleusenbehälters 17 mit einem Druck, der dem Druck im Einblasgefäß 18 von etwa 2,0 bar bis 7,0 bar - abhängig von der Art und Zusammensetzung des Staubgemisches - entspricht, werden beide Behälter miteinander verbunden, so daß das Staubgemisch aus dem Schleusenbehälter 17 in das Einblasgefäß 18 strömt. Nach der Entleerung des Schleusenbehälters 17 in das Einblasgefäß 18 wird die Verbindung wieder getrennt und der Schleusenbehälter 17 kann erneut gefüllt werden. Die Kopplung des Schleusenbehälters 17 mit dem Einblasgefäß 18 ermöglicht eine kontinuierliche Zuführung des Staubgemisches aus dem Einblasgefäß 18 zum IS-Schachtofen 2, was ohne Schleusenbehälter 17 nicht möglich wäre.

Im einzelnen läuft die Füllung des Schleusenbehälters 17 und des Einblasgefäßes 18 wie folgt ab. Ist die Mischzeit in der Mischeinrichtung 14 abgelaufen, so kann der Schleusenbehälter 17 befüllt werden. In diesem Zustand ist der Schleusenbehälter 17 entspannt. Der Schleusenbehälter 17 wird dann solange befüllt, bis der maximale Füllstand erreicht ist. Sodann kann der Umschleusvorgang eingeleitet werden. Die Anlage ist derart ausgebildet, daß die Menge, die sich im Schleusenbehälter 17 befindet, vom Einblasgefäß 18 aufgenommen werden kann. Durch die Steuereinrichtung ist der korrekte Ablauf des Umschleusens sichergestellt. Beim Bespannen des Schleusenbehälters 17 mit Stickstoff ist darauf zu achten, daß der Druck im Schleusenbehälter 17 gleich dem Druck im Einblasgefäß 18 ist. Ist dieser Zustand erreicht, wird der Einlauf des Einblasgefäßes 18 geöffnet und das Staubgemisch strömt aus dem Schleusenbehälter 17 in das Einblasgefäß 18. Nach Entleerung des Schleusenbehälters 17 wird die Verbindung zwischen dem Einblasgefäß 18 und dem Schleusenbehälter 17 wieder unterbrochen. Der Schleusenbehälter 17 kann anschließend entspannt werden. Es ist dabei darauf zu achten, daß während des Umschleusens der Druck im Einblasgefäß 18 auf einem solchen Niveau bleibt, um das Staubgemisch weiter, d.h. auch während des und nach dem Umschleusen, in den IS-Schachtofen 2 einblasen zu können. Gegebenenfalls. ist nach dem Umschleusen der Druck im Einblasgefäß 18 zu korrigieren bzw. anzupassen.

Dem Einblasgefäß 18 nachgeschaltet sind vorliegend acht Auflockerungsgefäße 19, von denen lediglich eines dargestellt ist. Die Auflockerungsgefäße 19 sind unterhalb des Einblasgefäßes 18 angeordnet, wobei zwischen jedem Auflockerungsgefäß 19 und dem Einblasgefäß 18 ein Schieber vorgesehen ist, so daß die jeweiligen Auflockerungsgefäße wahlweise von dem Einblasgefäß 18 getrennt werden können, wenn bestimmte Koaxiallanzen des IS-Schachtofens 2 nicht beschickt werden sollen. Jedes der Auflockerungsgefäße 19 ist von unten her druckbeaufschlagbar und weist eine poröse Bodenplatte auf, die als Auflockerungsboden dient. Der Auslauf der Auflockerungsgefäße ist jeweils in ihrem oberen Bereich.

Die Auflockerung und Fluidisierung des Staubgemisches wird bei der erfindungsgemäßen Ausgestaltung dadurch weiter verbessert, daß wenigstens eine zusätzliche, in jedes Auflockerungsgefäß 19 von oben her führende, vorzugsweise in einer Art Ringdüse endende Leitung zur Zuführung von weiterem Stickstoff zur Beschleunigung des Staubgemisches vorgesehen ist. Im übrigen ergibt sich durch die Möglichkeit der Zuführung von sogenanntem Bypassgas über die Ringdüse eine Steuerbarkeit des Staubgemischstromes unabhängig vom Druck im Einblasgefäß.

Aus jedem der Auflockerungsgefäße 19 führt eine Förderleitung heraus in Richtung IS-Schachtofen 2. Die Förderleitungen beginnen in den Auflockerungsgefäßen 19 am Auslauf des Einblasgefäßes 18. Das Staubgemisch wird aus dem Einblasgefäß 18 über die einzelnen Auflockerungsgefäße 19 und von dort über die Förderleitungen in den IS-Schachtofen 2 gefördert. Durch die Auflockerung des Staubgemisches in den Auflockerungsgefäßen 19 wird das für die pneumatische Förderung optimale Verhältnis von Staubmenge zur Gasmenge eingestellt. Je nach Staubart wird das Staubgemisch entweder im Dicht- oder im Flugstrom gefördert. Die zur Fluidisierung in die jeweiligen Auflockerungsgefäße 19 eingeleitete Gasmenge wird überwacht und von der Steuereinrichtung gesteuert. Für jedes Staubgemisch ist abhängig von seiner Zusammensetzung ein bestimmter Soll-Wert für die Auflockerung vorgegeben. Auch die Geschwindigkeit und der Systemdruck sind von der Art des Staubgemisches abhängig.

Durch die pneumatische Förderung, bei der die Geschwindigkeit des Staubgemisches bis zu 10 m/s beträgt, ergeben sich die geringsten Abrasionen in den Förderleitungen.

Jede der Förderleitungen ist, wie vorzugsweise auch alle anderen Leitungen der Einblasanlage 3, isoliert und ggfs. beheizt, jedenfalls soweit die Förderleitungen im Außenbereich der Anlage verlegt sind. Um keine Verstopfungen in den einzelnen Förderleitungen durch das recht schwierig zu fördernde Staubgemisch zu haben und die Geschwindigkeit des Staubgemisches im wesentlichen konstant zu halten, haben die Leitungen einen zum IS-Schachtofen größer werdenden Öffiiungsquerschnitt und keine Drosseln, wie dies bei Förderleitungen für andere Materialien häufig vorgesehen ist.

Nicht dargestellt ist, daß ein Freiblasen zumindest eines überwiegenden Teils der Leitungen in Richtung zum IS-Schachtofen 2 und ein Rückblasen in entgegengesetzter Richtung möglich ist. Hierzu sind an verschiedenen Stellen Anschlüsse mit entsprechenden Ventilen in den Leitungen vorgesehen, die ein Frei- und ein Rückblasen ermöglichen. Die Möglichkeit des Freiblasens bzw. Rückblasens muß gegeben sein, um etwaige Verstopfungen in den Leitungen beseitigen zu können. Vorzugsweise sollte ein Freiblasen vom Einblasgefäß 18 bis hin zum IS-Schachtofen 2 möglich sein. Die Stopfererkennung und damit die Steuerung des Freiblasens bzw. Rückblasens über die Steuereinrichtung erfolgt aufgrund einer Druckmessung an den einzelnen Förderleitungen.

Jedem Auflockerungsgefäß 19 bzw. jeder Förderleitung aus dem betreffenden Auflockerungsgefäß 19 sind zwei Koaxiallanzen bzw. zwei Heißwinddüsen 20 des IS-Schachtofens 2 zugeordnet. Grundsätzlich ist es natürlich möglich, für jede Lanze bzw. jede Heißwinddüse 20 ein Auflockerungsgefäß und eine Förderleitung vorzusehen. Dies ist jedoch vergleichsweise aufwendig und kostenintensiv. Genauso gut ist es theoretisch möglich, nur ein Auflockerungsgefäß mit einer Förderleitung vorzusehen und dann über einen aufwendigen Verteilmechanismus die einzelnen Koaxiallanzen bzw. Heißwinddüsen zu versorgen. Bei der erfindungsgemäßen Ausgestaltung ist eine gleichmäßige Versorgung der einzelnen Lanzen dadurch gewährleistet, daß jedem Auflockerungsgefäß 19 zwei Koaxiallanzen zugeordnet sind, wobei ein einfaches T-Stück als Verteiler in der betreffenden Förderleitung vorgesehen ist.

Grundsätzlich lassen sich die beiden Lanzen aber auch getrennt voneinander regeln und steuern. Dabei gilt grundsätzlich, daß eine Einzelsteuerung der Lanzen (jede Lanze für sich) oder aber auch eine Gesamtsteuerung (alle Lanzen gemeinsam) vorgesehen sein kann.

Wie zuvor bereits ausgeführt worden ist, werden als Lanzen Koaxiallanzen verwendet. Über diese Koaxiallanzen wird neben dem Staubgemisch über einen äußeren Ringspalt ein Gas bzw. Gasgemisch zugegeben, das u.a. Kühlungszwecken dient. Bei dem Gas kann es sich um Stickstoff, ein Stickstoff/Sauerstoff-Gemisch oder nur um Sauerstoff handeln. Statt des Sauerstoffs kann auch Luft verwendet werden. Das Verhältnis von Stickstoff zu Sauerstoff/Luft sowie die Menge des zugeführten Gases läßt sich über eine Steuereinrichtung steuern. Über das Gasgemisch lassen sich die einzelnen Lanzen kühlen, während die Sauerstoffzugabe auch zum Ausgleich des Abfalls der Temperatur im IS-Schachtofen vor der jeweiligen Heißwinddüse dient. Konstruktiv ist zur Einstellung des Mischungsverhältnisses eine Mischstation, die nicht näher dargestellt ist, vorgesehen, die von der Steuereinrichtung angesteuert werden kann. Am bzw. im IS-Schachtofen 2 ist im Bereich der Heißwinddüsen 20 ei-ne Temperaturüberwachung des Ofens und insbesondere auch der Koaxiallanzen vorgesehen. Gemessen wird außerdem die jeder Lanze bzw. jedem Paar Lanzen zugeführte Menge des Staubgemisches. Die Messung erfolgt dabei kontinuierlich. In Abhängigkeit des Meßergebnisses wird die Menge des Staubgemisches, des Gasgemisches und/oder das Verhältnis von Stickstoff zu Sauerstoff gesteuert.

Im übrigen bietet es sich an, die Temperatur der Formgasblasen im IS-Schachtofen 2 an allen Heißwinddüsen 20 in Abhängigkeit vom Schlackenstand zu messen. Je nach Meßergebnis der Temperatur kann die Einblasanlage 3 dann derart gesteuert werden, daß die Temperatur im Unterofen des IS-Schachtofens 2 bzw. die Formgasblasentemperatur im wesentlichen konstant gehalten werden kann, z. B. bei etwa 1800 °C.

Verfahrenstechnisch bietet es sich außerdem an, lediglich den Kohlenstoffträger einzublasen, um den Ofen beim Hoch- und Herunterfahren besser steuern zu können und andere Brennstoffe, wie beispielsweise Koks, einzusparen.

## Patentansprüche

1. Verfahren zur Zinkerzeugung nach dem IS-Verfahren in einer IS-Schachtofenanlage (1), die einen IS-Schachtofen (2) und eine Einblasanlage (3) aufweist, wobei ein feinkörniges Staubgemisch, das einen Kohlenstoffträger und Zink enthaltenden Staub aufweist, in den unteren Bereich des IS-Schachtofens (2) eingeblasen wird, **dadurch gekennzeichnet, daß** die mittlere Korngröße des Kohlenstoffträgers zwischen 10 und 200 µm liegt, daß die mittlere Korngröße des Staubs kleiner 50 µm ist und daß der Kohlenstoffträger und der Staub in einem Gewichtsverhältnis von mindestens 0,5 zu 1 gemischt werden

2. Verfahren nach Anspruch 1, **dadurch gekennzeichnet, daß** die mittlere Korngröße des Kohlenstoffträgers etwa 50 µm beträgt und daß die mittlere Korngröße des Staubs kleiner 10 µm ist und/oder daß der Kohlenstoffträger und der Staub in einem Gewichtsverhältnis gemischt werden, das etwa dem Zn/C-Verhältnis des IS-Schachtofens (2) entspricht.

3. Verfahren nach Anspruch 1 oder 2, **dadurch gekennzeichnet, daß** das Staubgemisch von der Einblasanlage (3) pneumatisch und kontinuierlich zum IS-Schachtofen (2) gefördert wird.

4. Verfahren nach einem der vorhergehenden Ansprüche, **dadurch gekennzeichnet, daß** der Staub, der Kohlenstoffträger und das Staubgemisch mit einem inerten Gas, wie Stickstoff gefördert werden, daß das Verhältnis von Staub zum Kohlenstoffträger einstellbar ist und daß die Menge des Gases zum Fluidisieren, Fördern und Einstellen der Geschwindigkeit des Staubgemisches steuerbar ist.

5. Verfahren nach einem der vorhergehenden Ansprüche, **dadurch gekennzeichnet, daß** die Temperatur der Formgasblasen an Heißwinddüsen (20) des IS-Schachtofens (2) in Abhängigkeit vom Schlackenstand gemessen und die Einblasanlage (3) derart gesteuert wird, daß sich zumindest im unteren Bereich des IS-Schachtofens (2) eine im wesentlichen konstante Temperatur einstellt.

6. Verfahren nach einem der vorhergehenden Ansprüche, **dadurch gekennzeichnet, daß** in den IS-Schachtofen (2) über Koaxiallanzen neben dem Staubgemisch über einen Ringspalt der jeweiligen Koaxiallanzen ein Gasgemisch aus Stickstoff sowie Sauerstoff und/oder Luft eingeblasen wird und daß die Menge des Gasgemisches und das Verhältnis von Stickstoff zu Sauerstoff/Luft in Abhängigkeit der Temperatur der Koaxiallanzen und/oder des IS-Schachtofens steuerbar ist.

7. Verfahren nach einem der vorhergehenden Ansprüche, **dadurch gekennzeichnet, daß** die jeder Lanze oder jedem paar Lanzen zugeführte Menge des Staubgemisches kontinuierlich gemessen wird und in Abhängigkeit des Meßergebnisses die Menge des Staubgemisches und/oder das Verhältnis von Stickstoff zu Sauerstoff des Gasgemisches gesteuert wird.

8. Verfahren nach einem der vorhergehenden Ansprüche, **dadurch gekennzeichnet, daß** als Kohlenstoffträger Feinkohle und/oder Anthrazit und/oder Koksabrieb und/oder Braunkohlenkoksstaub und/oder Kunststoffe verwendet wird/werden und/oder daß als Zink enthaltender Staub Zinkstaub, Kupferhüttenstaub, Hochofenstaub, Stahlwerksstaub, rezirkulierter Kupolofenstaub, Messingstaub, Zinkasche und/oder Bleistaub verwendet wird/werden.

9. Verfahren nach einem der vorhergehenden Ansprüche, **dadurch gekennzeichnet, daß** die Geschwindigkeit des Staubgemisches beim Einblasen bis maximal 30 m/s beträgt und/oder daß im Einblasgefäß (18) ein Druck von wenigstens 1 bar herrscht.

10. Verfahren nach einem der vorhergehenden Ansprüche, **dadurch gekennzeichnet, daß** zum Hochfahren des IS-Schachtofens (2) lediglich der Kohlenstoffträger eingeblasen wird.

## Claims

1. Method to produce zinc according to the IS process in an IS shaft furnace installation (1) that has an IS shaft furnace (2) and an injection device (3), wherein a fine-grained dust mixture having a dust containing carbon carrier and zinc is injected into the bottom region of the IS shaft furnace (2), **characterised in that** the average grain size of the carbon carrier is between 10 and 200 µm, that the average grain size of the dust is smaller than 50 µm, and that the carbon carrier and the dust are mixed in a weight ratio of at least 0.5:1.

2. Method according to claim 1, **characterised in that** the average grain size of the carbon carrier is approx. 50 µm and that the average grain size of the dust is smaller than 10 µm and/or that the carbon carrier and the dust are mixed in a weight ratio that corresponds to that of the Zn/C ratio of the IS shaft furnace (2).

3. Method according to claim 1 or 2, **characterised in that** the dust mixture is conveyed pneumatically from the injection device (3) and continuously to the shaft furnace (2).

4. Method according to any one of the preceding claims, **characterised in that** the dust, the carbon carrier and the dust mixture are conveyed with an inert gas, like nitrogen, that the ratio of dust to the carbon carrier can be adjusted and that the amount of the gases for fluidising, conveying and adjusting the velocity of the dust mixture can be controlled.

5. Method according to any one of the preceding claims, **characterised in that** the temperature of the injected forming gas is measured on the hot blast nozzles (20) of the IS shaft furnace (2) as a function of the state of the slag and the injecting device (3) is controlled in such a manner that a basically constant temperature is set at least in the bottom region of the IS shaft furnace (2).

6. Method according to any one of the preceding claims, **characterised in that** in addition to the dust mixture, a gas mixture of nitrogen as well as of oxygen and/or of air is injected into the IS shaft furnace (2) through the coaxial lances via an annular gap of the relevant coaxial lances, and that the amount of the gas mixture and the ratio of the nitrogen to the oxygen/air can be controlled as a function of the temperature of the coaxial lances and/or of the IS shaft furnace.

7. Method according to any one of the preceding claims, **characterised in that** the amount of dust mixture fed to each lance or each pair of lances is continually measured and the amount of the dust mixture and/or the ratio of nitrogen to oxygen of the gas mixture is controlled regardless of the measurement results.

8. Method according to any one of the preceding claims, **characterised in that** fine coal and/or anthracite and/or coke fines and/or brown coal dust and/or synthetic materials is/are used as carbon carrier, and/or that zinc dust, metallurgical copper dust, blast furnace dust, steel mill dust, recirculated cupola furnace dust, brass dust, zinc ash and/or lead dust is/are used as zinc containing dust.

9. Method according to any one of the preceding claims, **characterised in that** the velocity of the dust mixture during injection may be a maximum of 30 m/s and/or that in the injection vessel (18) a pressure of at least 1 bar prevails.

10. Method according to any one of the preceding claims, **characterised in that** for starting up the IS shaft furnace (2) only the carbon carrier is injected.

## Revendications

1. Procédé pour la fabrication de zinc selon le procédé IS dans une installation de four à cuve IS (1), qui présente un four à cuve IS (2) et une installation d'insufflation (3), un mélange de poussières à grains fins, qui présente un support de carbone et de la poussière contenant du zinc, étant insufflé dans la zone inférieure du four à cuve IS (2), **caractérisé en ce que** la grosseur moyenne de grain du support de carbone se situe entre 10 et 200 µm, **en ce que** la grosseur moyenne de grain de la poussière est inférieure à 50 µm et **en ce que** le support de carbone et la poussière sont mélangés dans un rapport de poids d'au moins 0,5 à 1.

2. Procédé selon la revendication 1, **caractérisé en ce que** la grosseur moyenne de grain du support de carbone est d'environ 50 µm et que la grosseur moyenne de grain de la poussière est inférieure à 10 µm et/ou que le support de carbone et la poussière sont mélangés dans un rapport de poids qui correspond à peu près au rapport Zn/C du four à cuve IS (2).

3. Procédé selon la revendication 1 ou 2, **caractérisé en ce que** le mélange de poussières est acheminé à partir de l'installation d'insufflation (3), de façon pneumatique et continue, au four à cuve IS (2).

4. Procédé selon l'une quelconque des revendications précédentes, **caractérisé en ce que** la poussière, le support de carbone et le mélange de poussières sont transportés avec un gaz inerte, tel que l'azote, **en ce que** le rapport de proportion entre la poussière et le support de carbone est ajustable et **en ce que** la quantité du gaz pour la fluidisation, le transport et l'ajustage de la vitesse du mélange de poussières est contrôlable.

5. Procédé selon l'une quelconque des revendications précédentes, **caractérisé en ce que** la température des bulles du gaz de formage sur les buses à vent chaud (20) du four à cuve IS (2) est mesurée en fonction de la ligne de laitier et l'installation d'insufflation (3) est commandée de façon qu'une température sensiblement constante s'établisse au moins dans la zone inférieure du four à cuve IS (2).

6. Procédé selon l'une quelconque des revendications précédentes, **caractérisé en ce qu'**un mélange gazeux fait d'azote et d'oxygène et/ou d'air est insufflé dans le four à cuve IS (2) au moyen de lances coaxiales parallèlement au mélange de poussières par une fente annulaire des lances coaxiales concernées et que la quantité du mélange gazeux et le rapport de proportion entre l'azote et l'oxygène/air est contrôlable en fonction de la température des lances coaxiales et/ou du four à cuve IS.

7. Procédé selon l'une quelconque des revendications précédentes, **caractérisé en ce que** la quantité du mélange de poussières, qui est amenée à chaque lance ou chaque paire de lances, est mesurée de façon continue et la quantité du mélange de poussières et/ou le rapport de proportion entre l'azote et l'oxygène du mélange gazeux est commandée en fonction du résultat de la mesure.

8. Procédé selon l'une quelconque des revendications précédentes, **caractérisé en ce que** du charbon fin et/ou de l'anthracite et/ou des fines de coke et/ou du poussier de coke de lignite et/ou des matières synthétiques sont utilisés comme support de carbone et/ou **en ce que** de la poussière de zinc, de la poussière métallurgique de cuivre, de la poussière de haut-fourneau, de la poussière d'aciérie, de la poussière recyclée de cubilot, de la poussière de laiton, de la cendre de zinc et/ou de la poussière de plomb est/sont utilisée(s) comme poussière contenant du zinc.

9. Procédé selon l'une quelconque des revendications précédentes, **caractérisé en ce que** la vitesse du mélange de poussières va jusqu'à 30m/s maximum lors de l'insufflation et/ou **en ce qu'**il règne une pression d'au moins 1 bar dans le récipient d'insufflation (18).

10. Procédé selon l'une quelconque des revendications précédentes, **caractérisé en ce que** seul le support de carbone est insufflé pour la montée en régime du four à cuve IS (2).
